# EUROPEAN PATENT APPLICATION

(11) **EP 1 475 686 A1**
(43) Date of publication of application: **10.11.2004**
(21) Application number: 04252169.0
(22) Date of filing: 14.04.2004
(51) Int. Cl.: G06F 1/00, G06F 3/033

(54) **Device, method and program for multiple user access management**

(30) Priority: 14.04.2003 JP 2003108847
(71) Applicant: MATSUSHITA ELECTRIC INDUSTRIAL CO., LTD., Kadoma-shi, Osaka 571-8501 (JP)
(72) Inventor: Kitamura, Ken, Nara-shi Nara 630-8364 (JP)
(74) Representative: Butcher, Ian James

(57) **Abstract**

A form display unit (31) displays a form in which a display item for starting a function that a general operator is prohibited to perform is made invisible. After this, an event processing unit (38) detects an event while the form is being displayed. If the detected event is a specific event, the event processing unit (38) authenticates a current operator as a specific operator, and activates a display change unit (32). The display change unit (32) makes the display item appear on the displayed form.

## Description

This application is based on an application No. 2003-108847 filed in Japan, the contents of which are hereby incorporated by reference.

### BACKGROUND OF THE INVENTION

### Field of the Invention

The present invention relates to an information processing apparatus, and in particular relates to an information processing apparatus used by a plurality of different operators.

### Related Art

Conventional information processing apparatuses employ techniques of managing access rights depending on operators, to ensure the security of data and also to prevent important data from being deleted by mistake. Also, in workflow and other systems in recent years, a plurality of operators perform specific operations (e.g., a data input operation, an approval operation) according to their respective rights on a predetermined unit of data (such as invoice data or form data), to produce a final outcome.

For example, Japanese Patent Application Publication No. H09-006681 discloses a device that grants access rights separately to a plurality of operators so that each operator performs necessary operations within the limits of his or her access rights.

In applications of such a system, a separate terminal may not be provided to each individual operator. For instance, when the system is introduced in a small work place, two or more operators may be required to share the same terminal. In such a case, shift operations such as logout, login, and system restart need to be performed each time one operator leaves and another operator takes over. To improve overall system efficiency, it is necessary to reduce such shift operations.

### SUMMARY OF THE INVENTION

In view of the above problems, the present invention aims to provide an information processing apparatus with which shift operations required at the time of an operator change can be reduced to thereby improve overall system efficiency.

The stated aim can be achieved by an information processing apparatus used by a plurality of different operators or operator groups, including: a form display unit operable to display a form together with information to be processed; an identification information reception unit operable to receive identification information from a current operator, while the form is being displayed together with the information; an operator identification unit operable to judge whether or not the received identification information identifies a specific operator or operator group; and a display change unit operable to make a specific display item which the specific operator or operator group is permitted to operate, appear on the displayed form without changing the displayed information, when the operator identification unit judges in the affirmative.

Here, the received identification information may be a character string, operation sequence information, biometric information, or a combination thereof, wherein the operator identification unit judges in the affirmative, if the received identification information matches a specific character string, specific operation sequence information, specific biometric information, or a combination thereof.

According to these constructions, the information processing apparatus identifies the current operator while the form is being displayed together with the information to be processed. Only when the current operator is identified as the specific operator, the information processing apparatus makes the specific display item appear on the screen. The specific display item is associated with a function which the specific operator is permitted to perform whereas a general operator is prohibited to perform. In this way, an operator change can be managed speedily and securely.

Also, the use of biometric information makes impersonation difficult. Hence an operator change can be managed with a higher level of security.

Here, when the operator identification unit judges in the affirmative, the display change unit may (a) make the specific display item appear on the displayed form if the specific display item is invisible on the displayed form, and (b) make the specific display item disappear from the displayed form if the specific display item is visible on the displayed form.

According to this construction, the visibility of the specific display item is toggled each time the current operator is identified as the specific operator. This facilitates a procedure in which the specific operator makes the specific display item invisible before the general operator takes over from the specific operator.

Here, when the operator identification unit judges in the affirmative, the display change unit may further make, if a display item which the specific operator or operator group is prohibited to operate is visible on the displayed form, the display item disappear from the displayed form.

According to this construction, if the display item which the specific operator is prohibited to operate is being displayed on the screen, such a display item is hidden when the current operator is identified as the specific operator. Thus, an operator change can be managed speedily and securely, not only in the case where available functions increase but also in the case where available functions decrease.

Here, the information processing apparatus may further include: a storage unit storing a permission list which shows all operators or operator groups, including the specific operator or operator group, that are permitted to operate the specific display item, wherein the operator identification unit identifies an operator or operator group from the received identification information, and the display change unit makes the specific display item appear on the displayed form, if the identified operator or operator group is included in the permission list.

According to this construction, an operator change can be managed speedily and securely, in cases where there are a plurality of operators who need to be identified, such as an application manager and a system manager, other than a general operator.

Here, the information processing apparatus may further include: a storage unit storing form definition information which defines the form containing the specific display item, wherein the form display unit displays the form according to the form definition information, in a state where a visibility property of the specific display item is set to invisible, and the display change unit redisplays the form according to the form definition information, in a state where the visibility property of the specific display item is set to visible.

This construction is suitable for use with a language having a GUI (graphical user interface) function that is capable of setting the visibility properties of display items in a form.

Here, the information processing apparatus may further include: an acquisition unit operable to acquire form definition information which defines the form containing the specific display item, from outside the information processing apparatus, wherein the form display unit displays the form according to the form definition information, in a state where a visibility property of the specific display item is set to invisible, and the display change unit redisplays the form according to the form definition information, in a state where the visibility property of the specific display item is set to visible.

This construction is suitable for cases such as where the form definition information is stored in an external storage device connected with the information processing apparatus via a communication line and acquired through communication.

The stated aim can also be achieved by an information processing system which is used by a plurality of different operators or operator groups and includes a server apparatus and a client apparatus, wherein the server apparatus includes: a form display data transmission unit operable to transmit first data showing a form to the client apparatus; an identification information receiving unit operable to receive identification information of a current operator, from the client apparatus; an operator identification unit operable to judge whether or not the received identification information identifies a specific operator or operator group; and a display change data transmission unit operable to transmit second data showing a specific display item which the specific operator or operator group is permitted to operate, to the client apparatus, when the operator identification unit judges in the affirmative, and the client apparatus includes: a form display unit operable to receive the first data from the server apparatus, and display the form shown by the first data; an identification information reception unit operable to receive the identification information from the current operator while the form is being displayed, and transmit the identification information to the server apparatus; and a display change unit operable to receive the second data from the server apparatus, and make the specific display item shown by the second data appear on the displayed form.

According to this construction, an information processing system having the same effects as above can be realized in a server-client construction. In this case, the operator identification is conducted in the server apparatus, with it being possible to strengthen the security and reduce the cost of managing verification data such as passwords.

The stated aim can also be achieved by a method of managing an operator change in an information processing apparatus which is used by a plurality of different operators or operator groups, including: a form display step of displaying a form together with information to be processed; an identification information reception step of receiving identification information from a current operator, while the form is being displayed together with the information; an operator identification step of judging whether or not the received identification information identifies a specific operator or operator group and a display change step of making a specific display item which the specific operator or operator group is permitted to operate, appear on the displayed form without changing the displayed information, when the operator identification step judges in the affirmative.

Here, when the operator identification step judges in the affirmative, the display change step may (a) make the specific display item appear on the displayed form if the specific display item is invisible on the displayed form, and (b) make the specific display item disappear from the displayed form if the specific display item is visible on the displayed form.

Here, when the operator identification step judges in the affirmative, the display change step may further make, if a display item which the specific operator or operator group is prohibited to operate is visible on the displayed form, the display item disappear from the displayed form.

Here, the specific display item may be associated with a permission list which shows all operators or operator groups, including the specific operator or operator group, that are permitted to operate the specific display item, wherein the operator identification step identifies an operator or operator group from the received identification information, and the display change step makes the specific display item appear on the displayed form, if the identified operator or operator group is included in the permission list.

According to these methods, an operator change can be managed speedily and securely, in the information processing apparatus.

The stated aim can also be achieved by a method of managing an operator change in an information processing system which is used by a plurality of different operators or operator groups and includes a server apparatus and a client apparatus, including: a form display data transmission step, performed by the server apparatus, of transmitting first data showing a form to the client apparatus; an identification information receiving step, performed by the server apparatus, of receiving identification information of a current operator from the client apparatus; an operator identification step, performed by the server apparatus, of judging whether or not the received identification information identifies a specific operator or operator group; a display change data transmission step, performed by the server apparatus, of transmitting second data showing a specific display item which the specific operator or operator group is permitted to operate, to the client apparatus, when the operator identification step judges in the affirmative; a form display step, performed by the client apparatus, of receiving the first data from the server apparatus, and displaying the form shown by the first data; an identification information reception step, performed by the client apparatus, of receiving the identification information from the current operator while the form is being displayed, and transmitting the identification information to the server apparatus; and a display change step, performed by the client apparatus, of receiving the second data from the server apparatus, and making the specific display item shown by the second data appear on the displayed form.

According to this method, an operator change can be managed speedily and securely, in the information processing system.

The stated aim can also be achieved by a computer-executable program for use in an information processing apparatus which is used by a plurality of different operators or operator groups, including codes for executing the steps of any of the above methods for the information processing apparatus.

The stated aim can also be achieved by a computer-executable program for use in an information processing system which is used by a plurality of different operators or operator groups and includes a server apparatus and a client apparatus, including codes for executing the steps of the above method for the information processing system.

According to these programs, an operator change can be managed speedily and securely, in the information processing apparatus and the information processing system.

### BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:
FIG. 1 is a functional block diagram showing an overall construction of an information processing apparatus to which the first embodiment of the invention relates;
FIG. 2 is a perspective view showing an example outward appearance of the information processing apparatus shown in FIG. 1;
FIG. 3 shows an example of form definition information shown in FIG. 1;
FIG. 4 is a flowchart of an overall operation of the information processing apparatus;
FIGS. 5A-5C show specific examples of displayed form images;
FIG. 6 is a flowchart of a form display operation;
FIG. 7A shows a specific example of codes used in the form display operation;
FIG. 7B shows a specific example of codes used in a display change operation;
FIG. 8 is a flowchart of the display change operation;
FIG. 9 is a functional block diagram showing an overall construction of an information processing apparatus to which the second embodiment of the invention relates;
FIG. 10 is a perspective view showing an example outward appearance of the information processing apparatus shown in FIG. 9;
FIG. 11 is a flowchart of an operator identification operation in the second embodiment;
FIG. 12 is a functional block diagram showing an overall construction of an information processing apparatus to which the third embodiment of the invention relates;
FIG. 13 shows an example of form definition information shown in FIG. 12;
FIG. 14 shows an example of verification data shown in FIG. 12;
FIG. 15 shows an example of a permission list shown in FIG. 12;
FIG. 16 is a flowchart of an operator identification operation in the third embodiment;
FIG. 17 is a flowchart of a display change operation in the third embodiment;
FIGS. 18A-18D show specific examples of displayed form images;
FIG. 19 is a functional block diagram showing an overall construction of an information processing system to which the fourth embodiment of the invention relates; and
FIG. 20 shows an example where form definition information and a permission list are expressed together in a text form.

### DESCRIPTION OF THE PREFERRED EMBODIMENTS

### First Embodiment

An information processing apparatus to which the first embodiment of the invention relates authenticates a specific operator different from a general operator, without terminating an AP (application program). Only when the authentication is successful, the information processing apparatus displays a specific item on a screen. This specific item is associated with a specific function which the general operator is prohibited to perform whereas the specific operator is permitted to perform. Since the specific item does not appear on the screen unless the authentication is successful, the general operator cannot operate the specific item to perform the specific function. In this way, available functions can be speedily and securely changed depending on operators.

This information processing apparatus is described in detail below, with reference to drawings.

### (Overall Construction)

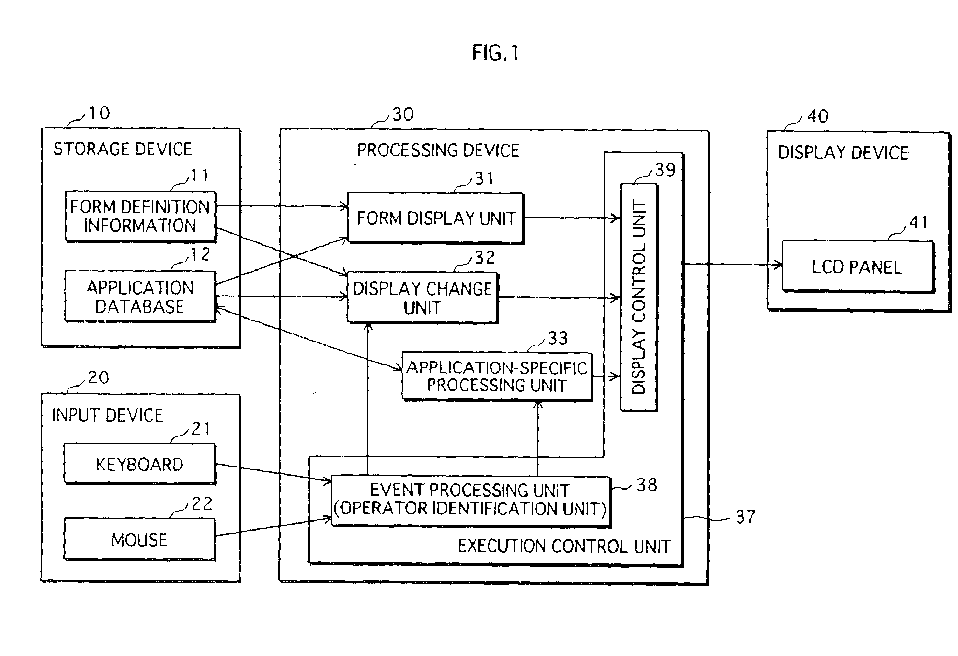

FIG. 1 is a functional block diagram showing an overall construction of the information processing apparatus. In the drawing, the information processing apparatus is roughly made up of a storage device 10, an input device 20, a processing device 30, and a display device 40.

The storage device 10 stores form definition information 11 and an application database 12. For example, the storage device 10 can be realized by a hard disk device.

The input device 20 includes a keyboard 21 and a mouse 22.

The processing device 30 includes a form display unit 31, a display change unit 32, an application specific processing unit 33, and an execution control unit 37. The execution control unit 37 includes an event processing unit 38 and a display control unit 39.

For example, the processing device 30 can be realized by a CPU (central processing unit), a RAM (random access memory), and a ROM (read only memory). In this case, the functions of each component of the processing device 30 can be realized by the CPU executing a program stored in the ROM using the RAM as a working memory.

As an example, the form display unit 31, the display change unit 32, and the application-specific processing unit 33 correspond to an AP, whereas the execution control unit 37 corresponds to an OS (operating system) and a runtime routine for a description language of the AP. The AP may be written in a language having a GUI function, such as Visual Basic (a registered trademark of Microsoft Corporation).

The display device 40 includes an LCD (liquid crystal display) panel 41.

It should be noted that the processing device 30 may instead be realized by a dedicated system which is implemented without its functions being separated between an AP and an OS. The processing device 30 may also be a one-chip IC (integrated circuit) for realizing such a dedicated system.

### (Outward Appearance)

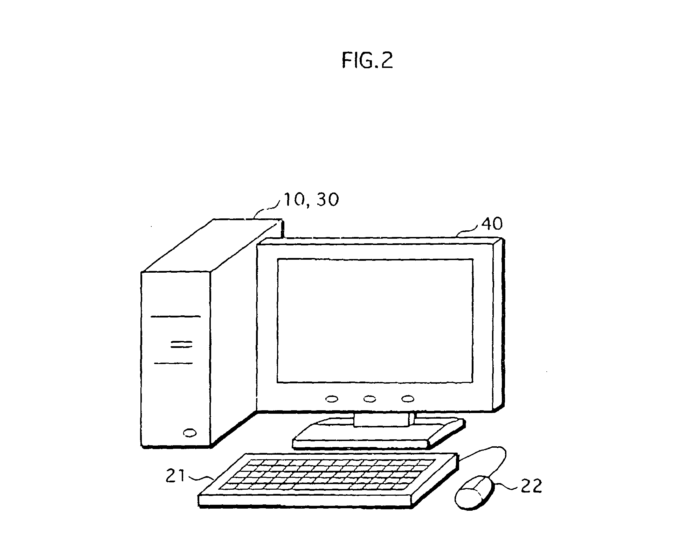

FIG. 2 is a perspective view showing an example outward appearance of the information processing apparatus. As illustrated, the information processing apparatus can be achieved by a general personal computer that is provided with an enclosure for housing the storage device 10 and the processing device 30, the keyboard 21, the mouse 22, and the display device 40.

### (Form Definition Information)

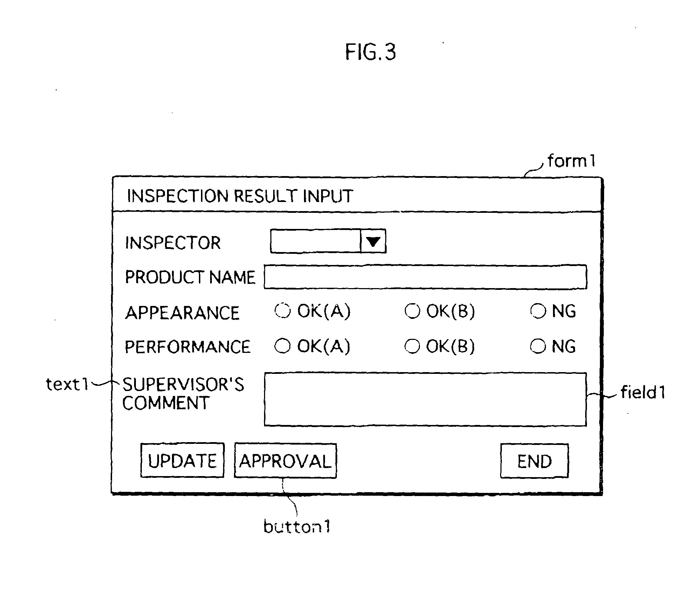

FIG. 3 shows an example of the form definition information 11 stored in the storage device 10. For example, the form definition information 11 is defined as a visual image through the use of a visual design tool.

In the drawing, the form definition information 11 shows an inspection result input form which is one of the forms displayed on the screen when the information processing apparatus is applied to an inspection management system. Though this embodiment uses an inspection management system as an example for explaining excellent effects of the information processing apparatus, it should be obvious that the information processing apparatus can equally be applied to other systems.

The inspection result input form is displayed when the information processing apparatus functions as an inspection result input subsystem. The inspection result input subsystem receives inspection result data, and updates the application database 12 based on the received inspection result data.

The inspection result input form includes an inspector list, a product name field, appearance inspection result buttons, performance inspection result buttons, a supervisor's comment field, an update button, an approval button, and an end button. The inspector list, the product name field, the appearance inspection result buttons, and the performance inspection result buttons are used for receiving inspection result data. The supervisor's comment field is used for receiving a supervisor's comment. The update button, the approval button, and the end button are used respectively for starting an inspection result, update operation, an inspection result approval operation, and an end operation.

Suppose an inspector inputs inspection result data on this inspection result input form, and then a supervisor inputs his or her comment and approves the inspector-input inspection result data on the same inspection result input form.

In this procedure, the information processing apparatus hides the supervisor's comment field and the approval button by making them invisible, while the inspector is inputting the inspection result data . After this, upon identifying the supervisor by receiving a specific operation, the in formation processing apparatus makes the supervisor's comment field and the approval button appear on the displayed inspection result input form. By doing so, the supervisor's comment input function and the inspection result approval function are made available to the supervisor and not to the inspector.

This is explained in greater detail below.

### (Overall Operation)

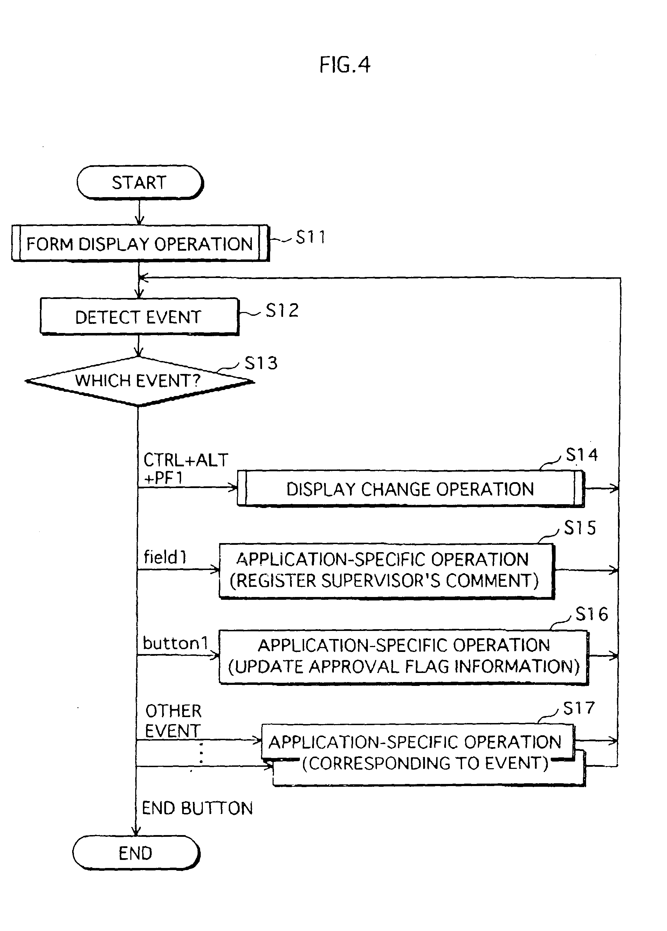

FIG. 4 is a flowchart of an overall operation of the information processing apparatus.

FIGS. 5A-5C show specific examples of form images displayed on the screen.

Once the information processing apparatus has started operating as the inspection result input subsystem, the form display unit 31 displays the inspection result input form in which the supervisor's comment field and the approval button are made invisible, on the screen via the display control unit 39 in the execution control unit 37 (S11). As a result, a form image such as the one shown in FIG. 5A is displayed on the screen.

The information processing apparatus then operates as a general event-driven system. In detail, the event processing unit 38 detects an event from the keyboard 21 and the mouse 22 (S12). The event processing unit 38 initiates an operation associated with the event, among the operations performed by the display change unit 32 and the application-specific processing unit 33 (S13).

For example, a display change operation performed by the display change unit 32 is associated with an event represented by a key operation sequence in which a PF1 key is pressed while a CTRL key and an ALT key are being pressed (hereafter "CTRL+ALT+PF1"). Upon detecting this event, the event processing unit 38 activates the display change unit 32 to perform the display change operation.

This key operation sequence CTRL+ALT+PF1 is known only to the supervisor. Accordingly, after the inspector enters the inspection result data, the event processing unit 38 authenticates the operator as the supervisor upon detecting this key operation sequence. Thus, the event processing unit 38 has an operator identification function in this construction. Note here that an event represented by a more complex key operation sequence may instead be used to authenticate the supervisor.

In response to the CTRL+ALT+PH1 event, the display change unit 32 performs the display change operation on the inspection result input form shown in FIG. 5A. Which is to say, the display change unit 32 makes the text data "supervisor's comment", the supervisor's comment field, and the approval button appear on the screen. While doing so, the input application data (the inspection result data input by the inspector in this example) remains on the screen (S14). As a result, the inspection result input form is changed to a form image such as the one shown in FIG. 5B.

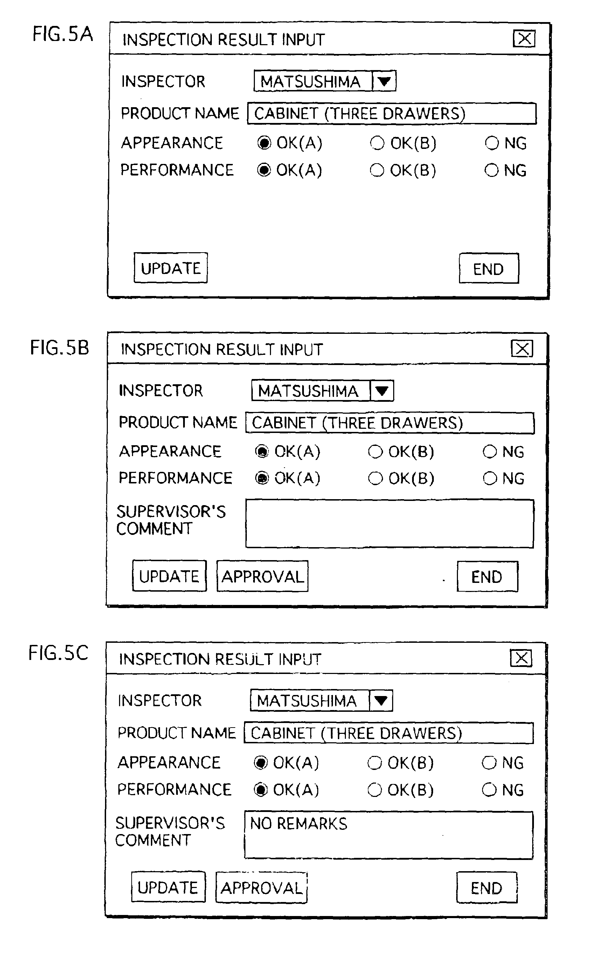

After this , the supervisor enters his or her comment . As a result, the inspection result input form is further changed to a form image such as the one shown in FIG. 5C.

A supervisors comment register operation and an approval flag information update operation performed by the application-specific processing unit 33 are associated respectively with an event represented by an input of data to the supervisor's comment field and an event represented by a incase click on the approval button. Upon detecting any of these events, the event processing unit 38 activates the application-specific processing unit 33 to perform the corresponding operation, to register the supervisor's comment to the application database 12 or to update approval flag information in the application database 12 (S15, S16).

The supervisor's comment register operation and the approval flag information update operation are associated with the events which occur on the supervisor's comment field and the approval button, respectively. In other words, these operations are possible only when the supervisor's comment field and the approval button are displayed on the inspection result input form. This means the operations can be performed only by the supervisor and not by the inspector.

The application-specific processing unit 33 also performs other operations specific to the inspection management system which are associated with different events. Upon detecting any of these events, the event processing unit 38 activates the application-specific processing unit 33 to perform a corresponding operation (S17). Since these operations specific to the inspection management system are not the main features of the invention, their explanation has been omitted here.

### (Form Display Operation).

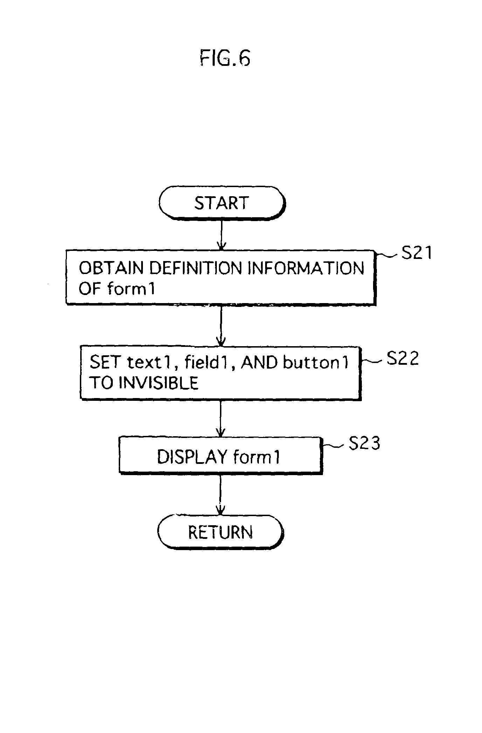

FIG. 6 is a flowchart of the form display operation performed by the form display unit 31, where a language having a GUI function is used as an example.

The form display unit 31 obtains definition information of the inspection result input form " form1" (S21). The form display unit 31 sets the visibility properties of "text1", "field1", and "button1" to invisible (S22), and displays the inspection result input form "form1" (S23). Here, "text1" is the character string "supervisor's comment", "field1" is the supervisor's comment field, and "button1" is the approval button (see FIG. 3).

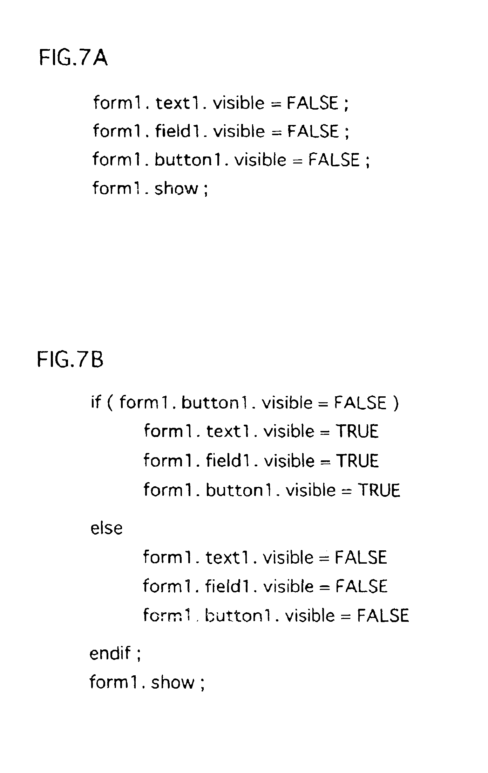

FIG. 7A shows a specific example of codes used in the form display operation.

In the drawing, the visibility property "form1. text1. visible" of "text1" is set to "FALSE" which indicates "invisible" (line 1). Likewise, the visibility property"form1. field1. visible" of "field1" and the visibility property "form1. button1. visible" of "button1" are set to "FALSE" (lines 2 and 3). After this, the "form1. show" command (line 4) is executed to display the inspection result input form "form1".

### (Display Change Operation)

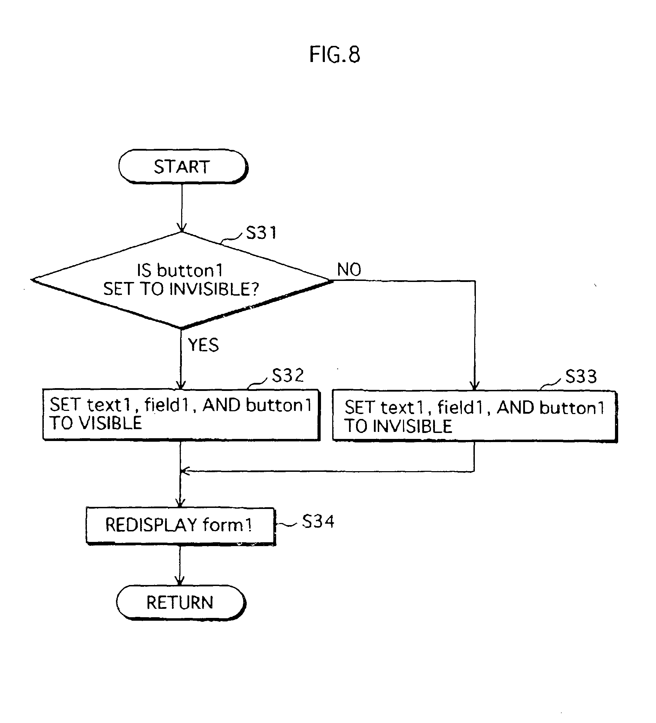

FIG. 8 is a flowchart of the display change operation performed by the display change unit 32.

If the visibility property of "button1" is invisible (S31:YES) , the display change unit 32 sets the visibility properties of "text1", "field1", and "button1" to visible (S32). Otherwise (S31:NO), the display change unit 32 sets the visibility properties of "text1", "field1", and "button1" to invisible (S33). The display change unit 32 then redisplays the inspection result input form "form1" (S34).

FIG. 7B shows a specific example of codes used in the display change operation.

In the drawing, if the visibility property "form1. button1. visible" of "button1" is "FALSE" which indicates "invisible", the if statement (line 1) is true. Accordingly, the visibility property "form1. text1. visible" of "text1" is set to "TRUE" which indicates "visible" (line 2). Likewise, the visibility property "form1. field1. visible" of "field1" and the visibility property "form1. button1. visible" of "button1" are set to "TRUE" (lines 3 and 4).

If the visibility property "form1. button1. visible" of "button1" is "TRUE" which indicates "visible", the else statement (line 5) is true. Accordingly, the visibility property "form1. text1. visible" of "text1" is set to "FALSE" which indicates "invisible" (line 6). Likewise, the visibility property "form1. field1. visible" of "field1" and the visibility property "form1. button1. visible" of "button1" are set to "FALSE" (lines 7 and 8).

Following this the "form1 . show" command (line 10) is executed to redisplay the inspection result input form "form1".

In this example, the visibility of the supervisor's comment field and the approval button is toggled. This facilitates a procedure in which the supervisor gives his or her approval and then makes the supervisor's comment field and the approval button invisible, before changing the place with the inspector.

### (Conclusion of the First Embodiment)

According to the first embodiment, the information processing apparatus authenticates the specific operator different from the general operator, without terminating an AP. Only when the authentication is successful, the information processing apparatus displays an item for starting a function which the specific operator is permitted to perform, on the screen. Thus, available functions can be speedily and securely changed depending on operators.

The first embodiment describes the case where the form definition information 11 is stored in the storage device 10. As an alternative, the form definition information may be stored in an external storage device which is connected with the information processing apparatus via a communication line. In such a case, the form display unit 31 obtains the form definition information through communication. Likewise, the application database 12 may be stored in the external storage device and accessed through communication.

In this specification, the term "operator" indicates not only an individual operator but also an operator group. Suppose a plurality of operators share the same verification data such as the above key operation sequence "CTRL+ALT+PF1". In this case, the term "operator" means an operator group. Therefore, the term "operator" is used as including an operator group, except in cases where the term clearly indicates an individual such as when biometric information(described later) is used as verification data.

### Second Embodiment

An information processing apparatus to which the second embodiment of the invention relates has a different construction for operator authentication from that of the first embodiment.

This information processing apparatus is described in detail below, with reference to drawings.

### (Overall Construction)

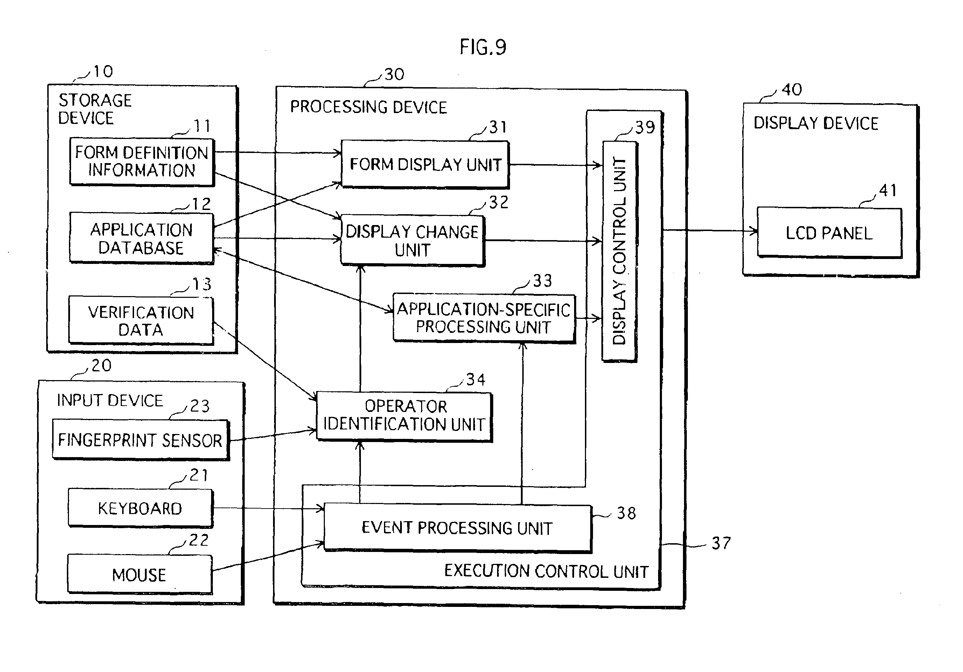

FIG. 9 is a functional block diagram showing an overall construction of the information processing apparatus. This information processing apparatus compares fingerprint information of an operator with verification data that is fingerprint information of a specific operator registered beforehand, to authenticate the specific operator. To do so, the information processing apparatus differs from that of the first embodiment shown in FIG. 1, in that the storage device 10 further stores verification data 13, the input device 20 further includes a fingerprint sensor 23, and the processing device 30 further includes an operator identification unit 34.

### (Outward Appearance)

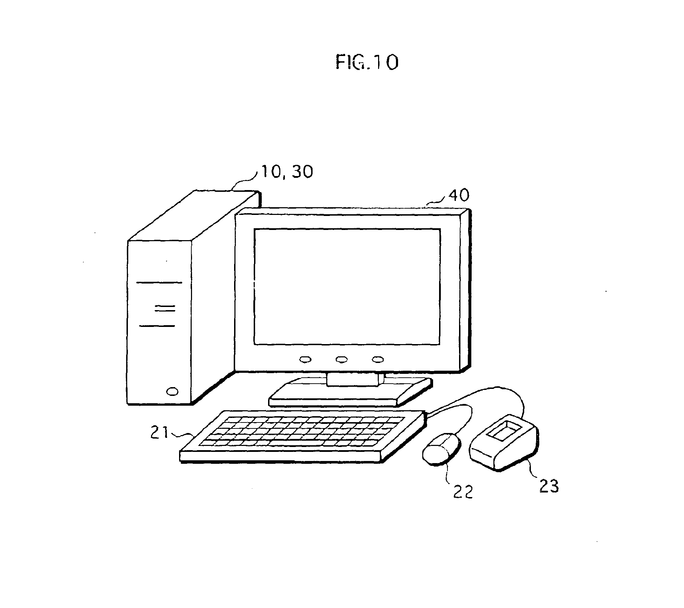

FIG. 10 is a perspective view showing an example outward appearance of the information processing apparatus. In the drawing, the information processing apparatus is provided with the fingerprint sensor 23, in addition to the enclosure for housing the storage device 10 and the processing device 30, the keyboard 21, the mouse 22, and the display device 40.

### (Operations)

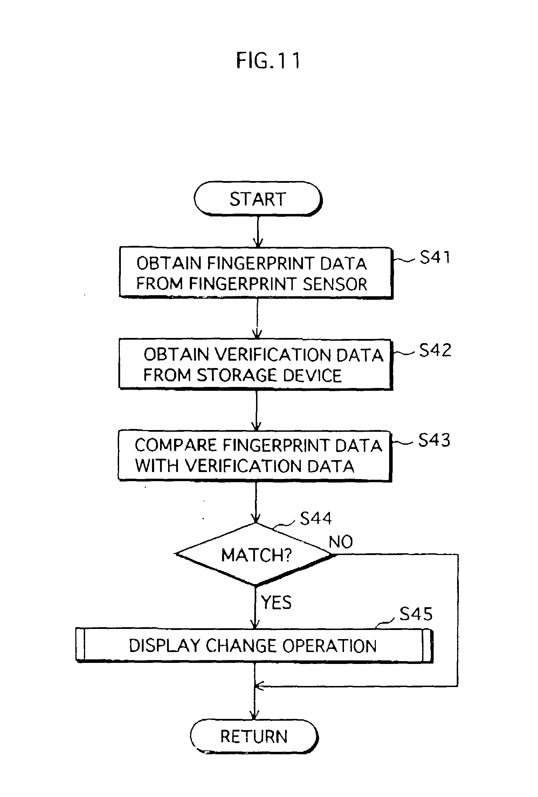

FIG. 11 is a flowchart of an operator identification operation performed by the operator identification unit 34.

In this information processing apparatus, the operator identification operation performed by the operator identification unit 34 is associated with the CTRL+ALT+PF1 event. This being so, upon detecting the CTRL+ALT+PF1 event, the event processing unit 38 activates the operator identification unit 34. The display change operation is called from this operator identification operation.

The operator identification unit 34 obtains fingerprint data from the fingerprint sensor 23 (S41), and obtains the verification data 13 from the storage device 10 (S42). The operator identification unit 34 compares the fingerprint data with the verification data 13 (S43). Only when the operator identification unit 34 successfully authenticates the specific operator (S44:YES), the display change operation is performed (S45).

Here, other biometric information such as voiceprint data and iris data may be used instead of fingerprint data, to authenticate the specific operator.

Alternatively, the authentication may be conducted based on information read from an IC card, an IC tag, or the like carried by the operator. Such information is, for example, a public-key certificate in PKI (public key infrastructure).

### (Conclusion of the Second Embodiment)

According to the second embodiment, the information processing apparatus uses information that is hard to counterfeit, to authenticate the specific operator. This enables available functions to be speedily changed depending on operators, with a high level of security.

### Third Embodiment

An information processing apparatus to which the third embodiment of the invention relates authenticates an operator out of a plurality of operators. The information processing apparatus displays an item which the operator is permitted to operate on a screen, and erases an item which the operator is prohibited to operate from the screen. The item displayed on the screen is associated with a function which the operator is permitted to perform, whereas the item erased from the screen is associated with a function which the operator is prohibited to perform. This allows the operator to perform only the function granted to him or her. In this way, available functions can be speedily and securely changed depending on operators.

This information processing apparatus is described in detail below, with reference to drawings.

### (Overall Construction)

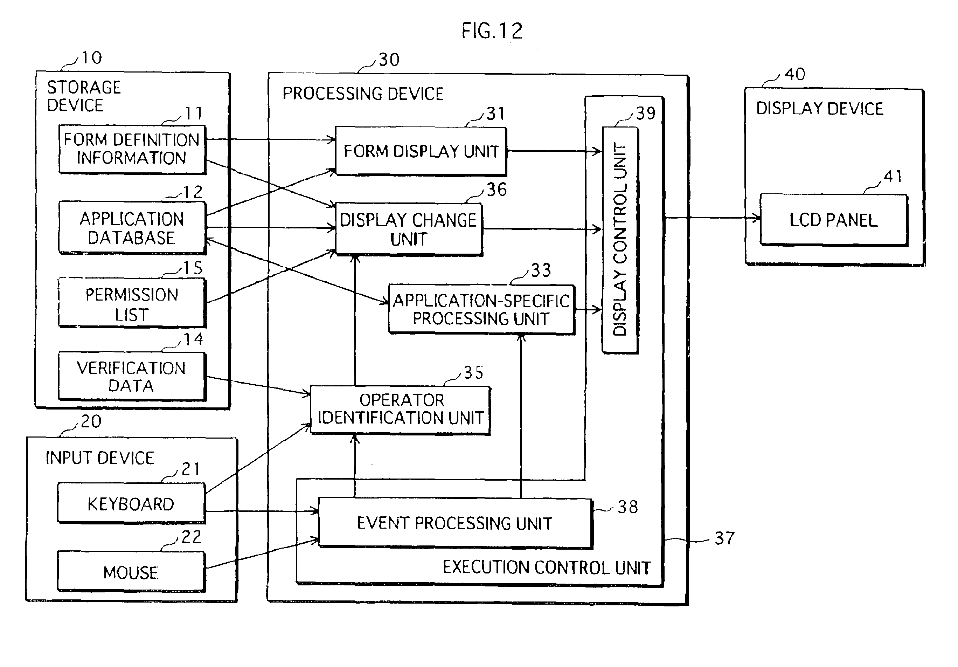

FIG. 12 is a functional block diagram showing an overall construction of the information processing apparatus. This information processing apparatus authenticates an operator out of a plurality of operators, and changes a display state of a screen depending on the operator. To do so, the information processing apparatus differs from that of the first embodiment shown in FIG. 1, in that the storage device 10 further stores verification data 14 and a permission list 15, the processing device 30 further includes an operator identification unit 35, and the display change unit 32 is replaced with a display change unit 36.

### (Form Definition Information)

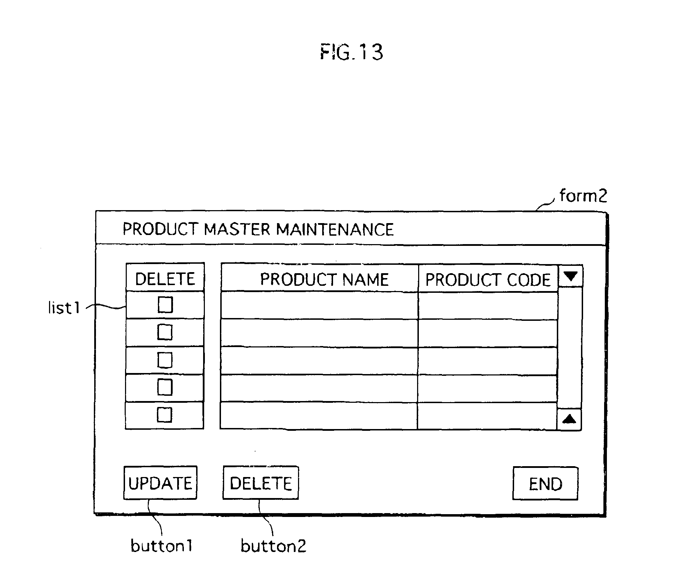

FIG. 13 shows an example of the form definition information 11 shown in FIG. 12. In the drawing, the form definition information 11 shows a product master maintenance form.

The product master maintenance form is displayed on the screen when the information processing apparatus functions as a product master maintenance subsystem. The product master maintenance subsystem performs maintenance on the contents of a product master in the application database 12.

The product master maintenance form includes a product name list, a product code list, a delete list, an update button, a delete button, and an end button. The product name list and the product code list are used for showing the contents of the product master and receiving an update. The delete list is used for receiving designation of a product to be deleted. The update button, the delete button, and the end button are used respectively for starting a product master update operation, a product master delete operation, and an end operation.

Suppose here that there are two types of operators who are different from a general operator, namely, an application manager and a system manager.

When activated, the information processing apparatus initially displays the product master maintenance form in which the delete list, the update button, and the delete button are made invisible on the screen, assuming that the current operator is the general operator.

After this, upon identifying the application manager by receiving a specific operator ID and password, the information processing apparatus makes the update button appear on the displayed product master maintenance form. Also, upon identifying the system manager by receiving another specific operator ID and password, the information processing apparatus makes the delete list, the update button, and the delete button appear on the displayed product master maintenance form.

This allows the general operator only to view the product master, the application manager to view and update the productmaster, and the system manager to view, update, and delete the product master.

### (Verification Data)

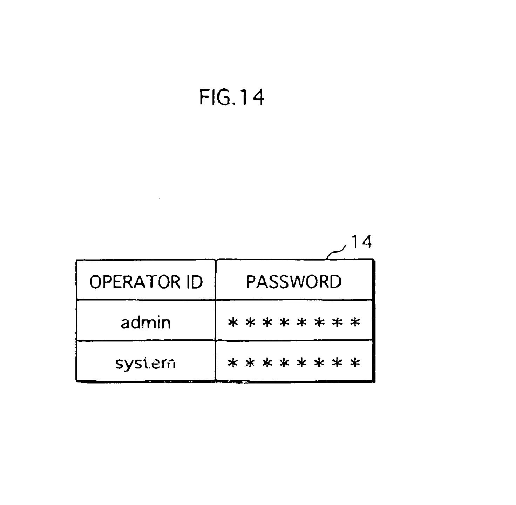

FIG. 14 shows an example of the verification data 14 shown in FIG. 12. The verification data 14 is referenced to authenticate two types of operators, i.e., the application manager and the system manager. The verification data 14 includes an operator ID "admin" and a password which identify the application manager, and an operator ID "system" and a password which identify the system manager.

### (Permission list)

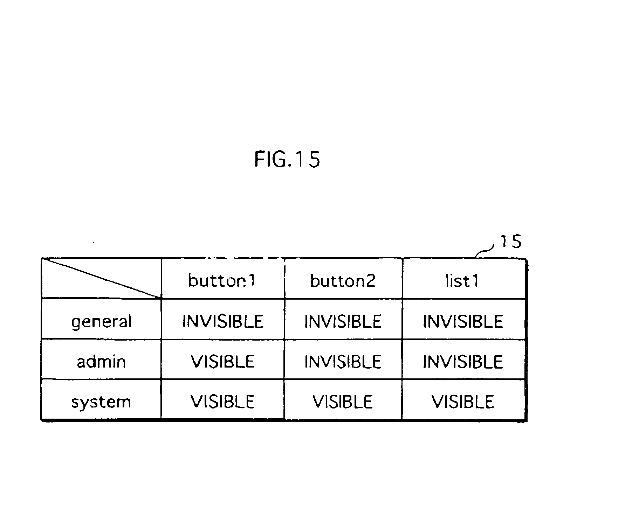

FIG. 15 shows an example of the permission list 15 shown in FIG. 12. The permission list 15 shows the visibility properties of the update button "button1", the delete button "button2", and the delete list "list1" , for each of the general operator "general", the application manager "admin", and the system manager "system". A visibility property referred to here indicates whether or not the operator is permitted to operate the item.

### (Operations)

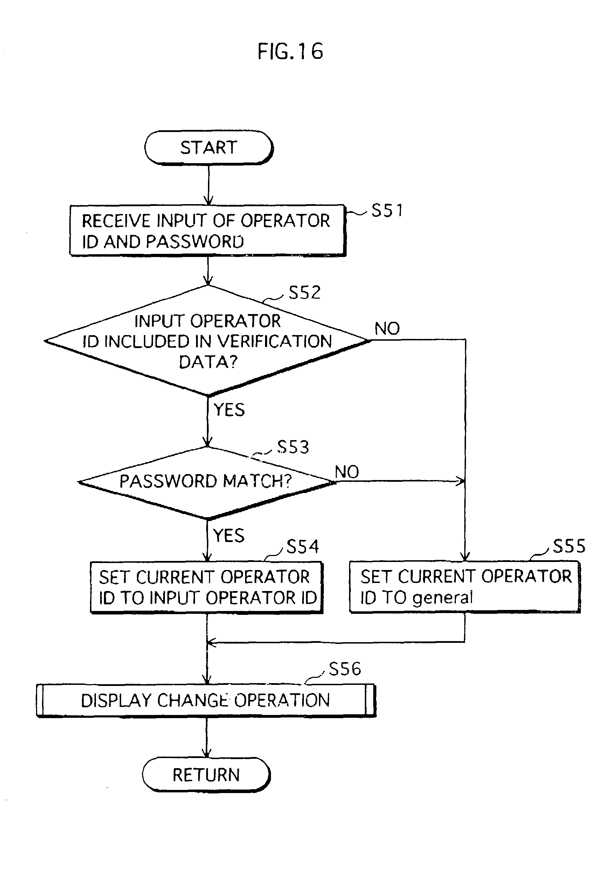

FIG. 16 is a flowchart of an operator identification operation performed by the operator identification unit 35.

In this information processing apparatus, the operator identification operation performed by the operator identification unit 35 is associated with the CTRL+ALT+PF1 event. This being so, upon detecting the CTRL+ALT+PF1 event, the event processing unit 38 activates the operator identification unit 35. The display change operation is called from this operator identification operation.

The operator identification unit 35 displays a dialog box or the like, and receives input of an operator ID and a password (S51). If the input operator ID is included in the verification data 14 (S52:YES) and the input password matches a password corresponding to the operator ID in the verification data 14 (S53 : YES), the operator identification unit 35 sets the input operator ID as the current operator ID (S54). Otherwise (S52:NO or S53:NO), the operator identification unit 35 sets "general" as the current operator ID (S55). The operator identification unit 35 then passes the current operator ID to the display change unit 36 as an argument, to start the display change operation (S56).

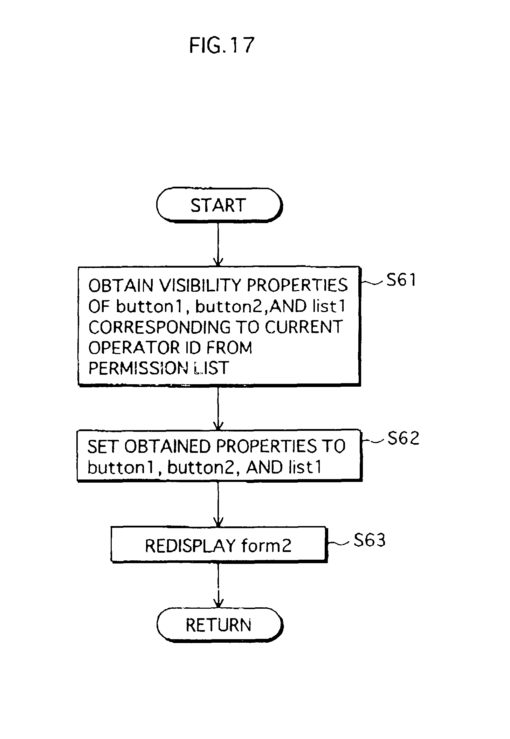

FIG. 17 is a flowchart of the display change operation performed by the display change unit 36.

The display change unit 36 obtains the visibility properties of "button1", "button2", and "list1" corresponding to the current operator ID passed as the argument, from the permission list 15 (S61). The display change unit 36 assigns the obtained visibility properties respectively to the update button "button1", the delete button "button2" , and the delete list "list1" (S62) . The display change unit 36 then redisplays the product master maintenance form "form2" (S63).

As a result, items which the current operator is permitted to operate are displayed on the screen, whilst items which the current operator is prohibited to operate are erased from the screen.

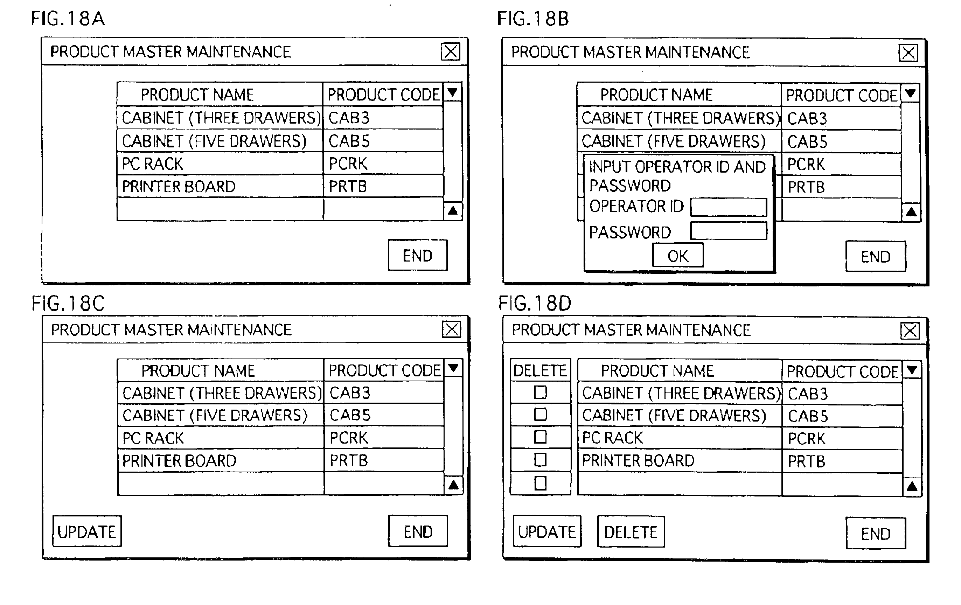

FIGS. 18A-18D show specific examples of form images displayed on the screen.

When the product master maintenance begins, a form image such as the one shown in FIG. 18A is initially displayed on the screen.

After this, when the key operation CTRL+ALT+PF1 is made, the dialog box shown in FIG. 18B is displayed to prompt for an operator ID and a password.

If the operator ID "admin" and password of the application manager are entered in the dialog box, the displayed image changes to a form image such as the one shown in FIG. 18C in which the update button appears.

If the operator ID "system" and password of the system manager are entered in the dialog box, the displayed image changes to a form image such as the one shown in FIG. 18D in which the delete list, the update button, and the delete button appear.

If the entered operator ID and password do not match the verification data 14, the current operator is identified as the general operator, and a form image such as the one shown in FIG. 18A is displayed on the screen.

All of these changes of available functions are carried out without changing the application data (the contents of the product master in this example) on the product master maintenance form displayed on the screen.

### (Conclusion of the Third Embodiment)

According to the third embodiment, the information processing apparatus authenticates an operator out of a plurality of operators witnout terminating an AP. The information processing apparatus displays an item for starting a function which the operator is permitted to perform on the screen, and hides an item for starting a function which the operator is prohibited to perform from the screen. In this way, available functions can be speedily and securely changed depending on operators.

### Fourth Embodiment

The fourth embodiment of the invention is a modification to the third embodiment. In detail, the information processing apparatus of the third embodiment is implemented as an information processing system having a server-client construction.

This information processing system is described in detail below, with reference to drawings.

### (Overall Construction)

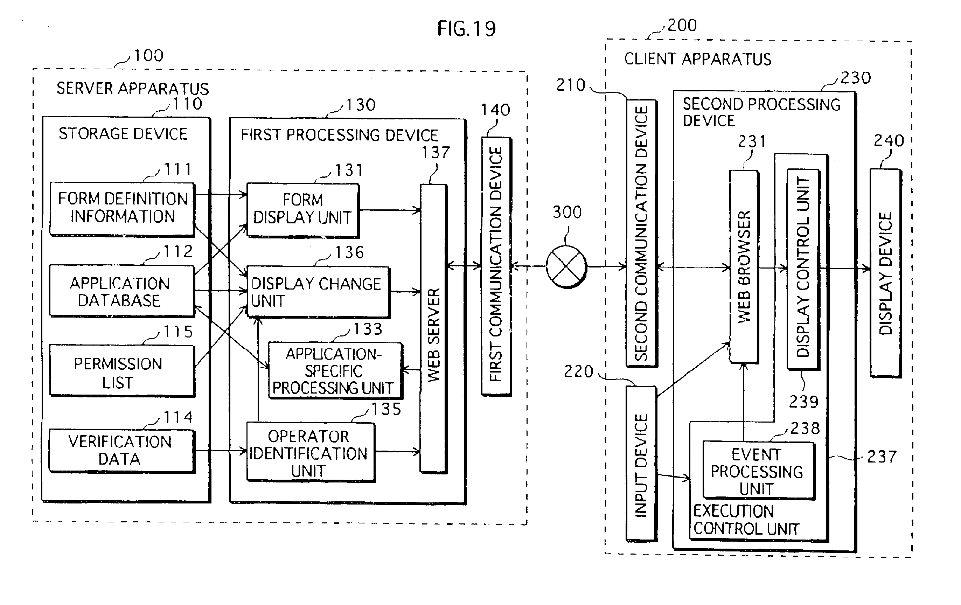

FIG. 19 is a functional block diagram showing an overall construction of the information processing system. In the drawing, the information processing system includes a server apparatus 100 and a client apparatus 200 which are connected via a network 300.

### (Server Apparatus 100)

The server apparatus 100 is roughly made up of a storage device 110, a first processing device 130, and a first communication device 140.

The storage device 110 stores form definition information 111, an application database 112, verification data 114, and a permission list 115. These information are substantially same as the form definition information 11, the application database 12, the verification data 14, and the permission list 15 stored in the storage device 10 in the information processing apparatus of the third embodiment shown in FIG. 12.

The first processing device 130 includes a form display unit 131, an application-specific processing unit 133, an operator identification unit 135, a display change unit 136, and a WEB server 137. For example, the form display unit 131, the application-specific processing unit 133, the operator identification unit 135, and the display change unit 136 can be realized as CGI (common gateway interface) program modules that are activated from the WEB server 137. The form display unit 131, the application-specific processing unit 133, the operator identification unit 135, and the display change unit 136 have functions respectively corresponding to the form display unit 31, the application-specific processing unit 33, the operator identification unit 35, and the display change unit 36 in the information processing apparatus of the third embodiment, as described later.

Note here that the form display unit 131, the application-specific processing unit 133, the operator identification unit 135, and the display change unit 136 may be written in a language having a database access function, such as Oracle PL/SQL (a registered trademark or a trademark of Oracle Corporation). This can simplify the description of the process for accessing the application database 112.

### (Client Apparatus 200)

The client apparatus 200 is roughly made up of a second communication device 210, an input device 220, a second processing device 230, and a display device 240.

The second communication device 210 communicates with the first communication device 140 in the server apparatus 100, via the network 300.

The input device 220 and the display device 240 are substantially same as the input device 20 and the display device 40 in the information processing apparatus of the third embodiment.

The second processing device 230 includes a WEB browser 231 and an execution control unit 237. The execution control unit 237 includes an event processing unit 238 and a display control unit 239.

The WEB browser 231 runs under control of the execution control unit 237. The execution control unit 237, the event processing unit 238 , and the display control, unit 239 have substantially same functions as the execution control unit 37, the event processing unit 38, and the display control unit 39 in the information processing apparatus of the third embodiment, respectively.

### (Operations)

An operation of the information processing system is explained below using the same example of product master maintenance as in the third embodiment, to clarify the difference from the operation of the information processing apparatus of the third embodiment.

When the operator accesses a predetermined page from the WEB browser 231, the WEB server 137 activates the form display unit 131. The form display unit 131 creates HTML (hypertext markup language) data showing a product master maintenance form (or a product master maintenance page) which does not include the delete list, the update button, and the delete button, with reference to the form definition information 111 and the product master in the application database 112. The WEB server 137 sends the HTML data to the WEB browser 231. The WEB browser 231 displays the image shown in FIG. 18A on the screen, based on the HTML data.

Following this, when the operator performs the key operation CTRL+ALT+PF1, the WEB browser 231 displays a dialog box to prompt for an operator ID and a password, as shown in FIG.18B. The WEB browser 231 posts the input operator ID and password to a predetermined page.

The WEB server 137 activates the operator identification unit 135, and notifies the operator identification unit 135 of the posted operator ID and password. The operator identification unit 135 identifies the operator based on the verification data 114 and notifies the display change unit 136 of the operator, in the same way as in FIG. 16.

The display change unit 136 creates HTML data showing a product master maintenance form (or a product master maintenance page) which includes visible items and does not include invisible items corresponding to the operator, with reference to the permission list 115. The WEB server. 137 sends the HTML data to the WEB browser 231.

If the operator is the general operator, the WEB browser 231 returns to the image shown in FIG. 18A, according to the HTML data which does not include the delete list, the update button, and the delete button.

If the operator is the application manager, the WEB browser 231 makes the update button appear as in the image shown in FIG. 18C, according to the HTML data which includes the update button but does not include the delete list and the delete button.

If the operator is the system manager, the WEB browser 231 makes the delete list, the update button, and the delete button appear as in the image shown in FIG. 18D, according to the HTML data which includes the delete list, the update button, and the delete button.

### (Modification to the Form Definition Information and the Permission list)

The form definition information and the permission list may be expressed together in a text form.

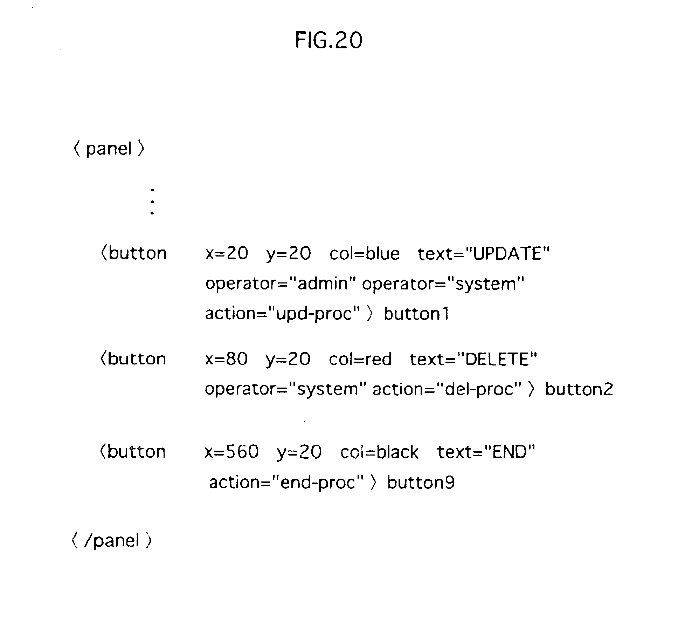

FIG. 20 shows an example of this modification. In the drawing, the form definition information and the permission list are expressed in a format similar to HTML page description, and further includes designation of authorized operators for each item. The display change unit 136 creates the HTML data by excluding invisible items based on this information.

### (Conclusion of the Fourth Embodiment)

The information processing system of the fourth embodiment produces the same effects as the information processing apparatus of the third embodiment. Also, since the operator authentication is conducted in the server apparatus, the security is further strengthened and the cost of managing passwords is reduced. This eases procedures such as periodic password changing, with it being possible to further strengthen the security.

### Other Modifications

The invention has been described by way of the above embodiments, though it should be obvious that the invention is not limited to the above. Example modifications are given below.

The invention also applies to the methods described above. The methods may be realized by a computer program that can be executed by a computer system. The computer program may be distributed as a digital signal.

The invention may also be realized by a computer-readable storage medium, such as a flexible disk, a hard disk, a CD, an MO, a DVD, a BD, or a semiconductor memory, on which the computer program or digital signal mentioned above is recorded.

The computer program or digital signal that achieves the invention may also be transmitted via a network, such as an electronic communications network, a wired or wireless communications network, or the Internet.

The computer program or digital signal may also be provided to an independent computer system by distributing a storage medium on which the computer program or digital signal is recorded, or by transmitting the computer program or digital signal via a network. The independent computer system may then execute the computer program or digital signal to function as the invention.

Although the present invention has been fully described by way of examples with reference to the accompanying drawings, it is to be noted that various changes and modifications will be apparent to those skilled in the art.

Therefore, unless such changes and modifications depart from the scope of the present invention, they should be construed as being included therein.

## Claims

1. An information processing apparatus used by a plurality of different operators or operator groups, comprising:
a form display unit operable to display a form together with information to be processed;
an identification information reception unit operable to receive identification information from a current operator, while the form is being displayed together with the information;
an operator identification unit operable to judge whether or not the received identification information identifies a specific operator or operator group; and
a display change unit operable to make a specific display item which the specific operator or operator group is permitted to operate, appear on the displayed form without changing the displayed information, when the operator identification unit judges in the affirmative.

2. The information processing apparatus of Claim 1,
wherein when the operator identification unit judges in the affirmative, the display change unit (a) makes the specific display item appear on the displayed form if the specific display item is invisible on the displayed form, and (b) makes the specific display item disappear from the displayed form if the specific display item is visible on the displayed form.

3. The information processing apparatus of Claim 1,
wherein when the operator identification unit judges in the affirmative, the display change unit further makes, if a display item which the specific operator or operator group is prohibited to operate is visible on the displayed form, the display item disappear from the displayed form.

4. The information processing apparatus of Claim 1, further comprising:
a storage unit storing a permission list which shows all operators or operator groups, including the specific operator or operator group, that are permitted to operate the specific display item,
wherein the operator identification unit identifies an operator or operator group from the received identification information, and
the display change unit makes the specific display item appear on the displayed form, if the identified operator or operator group is included in the permission list.

5. The information processing apparatus of Claim 1,
wherein the received identification information is a character string, operation sequence information, biometric information, or a combination thereof, and
the operator identification unit judges in the affirmative, if the received identification information matches a specific character string, specific operation sequence information, specific biometric information, or a combination thereof.

6. The information processing apparatus of Claim 1, further comprising:
a storage unit storing form definition information which defines the form containing the specific display item,
wherein the form display unit displays the form according to the form definition information, in a state where a visibility property of the specific display item is set to invisible, and
the display change unit redisplays the form according to the form definition information, in a state where the visibility property of the specific display item is set to visible.

7. The information processing apparatus of Claim 1, further comprising:
an acquisition unit operable to acquire form definition information which defines the form containing the specific display item, from outside the information processing apparatus,
wherein the form display unit displays the form according to the form definition information, in a state where a visibility property of the specific display item is set to invisible, and
the display change unit redisplays the form according to the form definition information, in a state where the visibility property of the specific display item is set to visible.

8. An information processing system which is used by a plurality of different operators or operator groups and comprises a server apparatus and a client apparatus,
wherein the server apparatus includes:
a form display data transmission unit operable to transmit first data showing a form to the client apparatus;
an identification information receiving unit operable to receive identification information of a current operator, from the client apparatus;
an operator identification unit operable to judge whether or not the received identification information identifies a specific operator or operator group; and
a display change data transmission unit operable to transmit second data showing a specific display item which the specific operator or operator group is permitted to operate, to the client apparatus, when the operator identification unit judges in the affirmative, and
the client apparatus includes:
a form display unit operable to receive the first data from the server apparatus, and display the form shown by the first data;
an identification information reception unit operable to receive the identification information from the current operator while the form is being displayed, and transmit the identification information to the server apparatus; and
a display change unit operable to receive the second data from the server apparatus, and make the specific display item shown by the second data appear on the displayed form.

9. A method of managing an operator change in an information processing apparatus which is used by a plurality of different operators or operator groups, comprising:
a form display step of displaying a form together with information to be processed;
an identification information reception step of receiving identification information from a current operator, while the form is being displayed together with the information;
an operator identification step of judging whether or not the received identification information identifies a specific operator or operator group; and
a display change step of making a specific display item which the specific operator or operator group is permitted to operate, appear on the displayed form without changing the displayed information, when the operator identification step judges in the affirmative.

10. The method of Claim 9,
wherein when the operator identification step judges in the affirmative, the display change step (a) makes the specific display item appear on the displayed form if the specific display item is invisible on the displayed form, and (b) makes the specific display item disappear from the displayed form if the specific display item is visible on the displayed form.

11. The method of Claim 9,
wherein when the operator identification step judges in the affirmative, the display change step further makes, if a display item which the specific operator or operator group is prohibited to operate is visible on the displayed form, the display item disappear from the displayed form.

12. The method of Claim 9,
wherein the specific display item is associated with a permission list which shows all operators or operator groups , including the specific operator or operator group, that are permitted to operate the specific display item,
the operator identification step identifies an operator or operator group from the received identif ication information, and
the display change step makes the specific display item appear on the displayed form, if the identified operator or operator group is included in the permission list.

13. A method of managing an operator change in an information processing system which is used by a plurality of different operators or operator groups and includes a server apparatus and a client apparatus, comprising:
a form display data transmission step, performed by the server apparatus, of transmitting first data showing a form to the client apparatus;
an identification information receiving step, performed by the server apparatus, of receiving identification information of a current operator from the client apparatus;
an operator identification step, performed by the server apparatus, of judging whether or not the received identif ication information identifies a specific operator or operator group;
a display change data transmission step, performed by the server apparatus, of transmitting second data showing a specific display item which the specific operator or operator group is permitted to operate, to the client apparatus, when the operator identification step judges in the affirmative;
a form display step, performed by the client apparatus, of receiving the first data from the server apparatus, and displaying the form shown by the first data;
an identification information reception step, performed by the client apparatus, of receiving the identification information from the current operator while the form is being displayed, and transmitting the identification information to the server apparatus; and
a display change step performed by the client apparatus, of receiving the second data from the server apparatus, and making the specific display item shown by the second data appear on the displayed form.

14. A computer-executable program for use in an information processing apparatus which is used by a plurality of different operators or operator groups, comprising codes for executing the steps of any of Claims 9 to 12.

15. A computer-executable program for use in an information processing system which is used by a plurality of different operators or operator groups and includes a server apparatus and a client apparatus, comprising codes for executing the steps of Claim 13.
